# EUROPEAN PATENT APPLICATION

(11) **EP 3 018 367 A1**
(43) Date of publication of application: **11.05.2016**
(21) Application number: 14820287.2
(22) Date of filing: 15.04.2014
(51) Int. Cl.: F16B 39/30, F16B 39/282

(54) **ANTI-LOOSENING THREADED PART**

(30) Priority: 03.07.2013 CN 201310275676; 03.07.2013 CN 201320391417 U
(71) Applicant: Xu, Songlin, Zhangjiagang, Jiangsu 215600 (CN)
(72) Inventor: Xu, Songlin, Zhangjiagang, Jiangsu 215600 (CN)
(74) Representative: Engelhard, Markus
(86) International application number: PCT/CN2014/075346
(87) International publication number: WO 2015/000318

(57) **Abstract**

An anti-loosening threaded part comprises an internal threaded part (1) and an external threaded part (2). A cylindrical internal thread (3) is arranged in an inner hole of the internal threaded part (1), a cylindrical external thread (4) is arranged on a screw of the external threaded part (2), the root of the external thread (4) or the internal thread (3) has a wedge-shaped inclined surface (6) forming an included angle α or an included angle β with a longitudinal center axis (5) of the external thread (4) or the internal thread (3), tanα or tanβ is less than a dynamic friction factor between the wedge-shaped inclined surface (6) and a contact surface of the internal thread (3) or the external thread (4). After the internal thread part and the external thread part are mutually tightened, a surface of the internal thread (3) or the external thread (4) and the wedge-shaped inclined surface (6) are mutually close contact structure, that is, a horizontal locking structure, and as long as the surface of the internal thread or the external thread and the wedge-shaped inclined surface are in a mutually close contact through pretightening force, loosening can be effectively prevented in cylindrical threaded part connecting pairs having threaded surfaces and made of various materials.

## Description

### BACKGROUND

### Technical Field

The present invention relates to an anti-loosening threaded part.

### Related Art

Loosening of cylindrical threaded part connecting pairs in transverse vibration or impact environments is a problem that has bothered us for a long time, and what is the reason for the loosening of cylindrical threaded part connecting pairs in transverse vibration or impact environments? The inventor gives specific analyses hereinafter.

Between internal and external threads of a set of cylindrical threaded part connecting pairs, longitudinal self-locking of the threaded part connecting pairs can be realized as long as a friction coefficient and a lead angle between flanks reach certain values.

When ordinary cylindrical threaded part connecting pairs are not affected by an external force in a tightened state, certain gaps exist between the internal and external threads in longitudinal and transverse directions.

By taking that a group of standard right-handed cylindrical threaded nuts are tightened on corresponding standard right-handed all-teeth cylindrical threaded bolts (certain gaps exist between the internal and external threads in longitudinal and transverse directions), one end of the nuts being in contact with bolt heads, and have threaded part connecting pairs with certain pretightening force as an example, in a posture that the bolt heads are upwardly perpendicular to a horizontal plane, the threaded part connecting pairs make forward movement of impacting a rigid fixture at a certain speed in a horizontal line direction (at the moment of impact, only the bolt heads and the fixture contact). If the bolts and the nuts are divided into left and right sides with a plane including a longitudinal center axis of an internal thread and a longitudinal center axis of an external thread overlapping with each other and parallel to a direction of movement of the threaded part connecting pairs, an upper tooth side of the left external thread of the bolts presents a downward bending slope, while an upper tooth side of the right external thread of the bolts presents an upward bending slope, due to such a structure, at the moment when the threaded part connecting pairs impact the fixture, there is a tendency of mutual extrusion between a lower tooth side of the right internal thread of the nuts and the upper tooth side of the right external thread of the bolts, while there is a tendency of mutual separation between a lower tooth side of the left internal thread of the nuts and the upper tooth side of the left external thread of the bolts, therefore, at the moment when the threaded part connecting pairs impact the fixture, friction force between the lower tooth side of the right internal thread of the nuts and the upper tooth side of the right external thread of the bolts is greater than that between the lower tooth side of the left internal thread of the nuts and the upper tooth side of the left external thread of the bolts, therefore, at the moment when the threaded part connecting pairs impact the fixture, the nuts will produce a tendency of making movement of rotating to the left by taking a contact surface between the lower tooth side of the right internal thread and the upper tooth side of the right external thread as a pivot (theoretically, upper and lower tooth sides of a circle of internal and external threads of ordinary cylindrical threads are formed by arranging many straight lines not parallel to each other along spiral lines of the threads, therefore, between the lower tooth side of a circle of internal threads and the upper tooth side of a circle of external threads of ordinary cylindrical threads matching and contacting each other, as long as the mutual matching and contacting state is changed, there will be only one contact point instead of a contact surface between the lower tooth side of the internal threads and the upper tooth side of the external threads, and thus the contact point is a theoretical pivot), so, at the moment when the threaded part connecting pairs impact the fixture, a resultant force that the nuts are subject to exceeds a certain value, the nuts will make movement of rotating to the left without a fixed shaft, that is, the loosening movement of the nuts relative to the bolts, and transverse gaps between the internal and external threads just provide a space where the nuts make movement of rotating to the left without a fixed shaft. Like a small experiment below: on a cylindrical pen horizontally suspended, a circle whose internal diameter is more than twice (which facilitates the experiment, and can also amplify the visual effect of the experiment) the external diameter of the pen is sheathed on the pen, a hard push is given to the middle of the circle, the circle will make movement of rotating longitudinally without a fixed shaft, as long as the pushing direction is not changed, the rotating direction of the circle is not changed, and as long as the pushing direction is changed, the rotating direction of the circle is also changed.

Therefore, it can be considered that the reason why ordinary cylindrical threaded part connecting pairs loose in transverse vibration or impact environments is as follows: for the ordinary cylindrical threaded part connecting pairs in transverse vibration or impact environments, due to the screw structure of the threads, the friction force between tooth sides of internal and external threads at one side is greater than that between tooth sides of internal and external threads at the other side, therefore, the internal threaded part or the external threaded part will produce a tendency of making movement of rotating transversely by taking a contact surface between tooth sides of the internal and external threads at the side with the greater friction force as a pivot, so, when the resultant force that the internal threaded part or the external threaded part is subject to exceeds a certain value, the internal threaded part or the external threaded part will make movement of rotating transversely without a fixed shaft, the direction of transverse rotation is the direction of relative loosening between the internal and external threaded parts, transverse gaps between the internal and external threads provide a space where the internal and external threaded parts make movement of rotating transversely without a fixed shaft therebetween, and a dynamic friction factor between the tooth sides of the internal and external threads and a dip angle between the tooth sides cannot satisfy the condition of transverse self-locking of the thread part connecting pairs.

Therefore, as long as the movement of rotating transversely without a fixed shaft between the internal and external threaded parts is stopped, complete loosening prevention of the threaded part connecting pairs in transverse vibration or impact environments can be realized.

American Horace D. Holmes designs a Spiralock nut, which obtained a patent and went into operation in 1970s, and has been greatly appreciated by users, however, a professor in MIT says, "test conditions of such a fastening system are particularly good, and the purpose of the test is because of lack of a theoretical basis". Generally, the root of the internal thread or external thread of the Spiralock cylindrical threaded part has a wedge-shaped inclined surface which is at an angle of 30° with the longitudinal center axis of the internal thread or external thread, and dynamic friction factors between threaded surfaces of cylindrical threaded part connecting pairs requiring loosening prevention are all less than tan30°(≈0.577), so, transverse locking cannot exist between a surface of the internal thread or external thread and the wedge-shaped inclined surface, and thus it is necessary to use a recommended great pretightening force to make deformation produced between the surface of the internal thread or external thread and the wedge-shaped inclined surface to form a transverse locking structure, so as to effectively stop the movement of rotating transversely without a fixed shaft between the internal and external threaded parts, so that effective loosening prevention of the cylindrical threaded part connecting pairs can be realized.

An object is stationary on a slope, when a dip angle of the slope is increased to 0, the object just can slide down from the slope at a constant speed, at this point, the dip angle θ of the slope is called frictional angle, it is possible to calculate a dynamic friction factor between the object and the slope according to the frictional angle, that is, µt=tanθ, and it is also possible to calculate the frictional angle according to the dynamic friction factor between the object and the slope, that is, θ=tan⁻¹µ. When the dip angle of the slope is less than the frictional angle θ, no matter how heavy the object on the slope is, the object will not slide; and when the dip angle of the slope is greater than the frictional angle θ, no matter how heavy the object on the slope is, the object will slide.

In use of a threaded fastener, if a dynamic friction factor between the internal and external threads is too large, it is easy to result in that connected parts produce a loosening crisis due to insufficient clamp force. According to the VDA235-101 standard made by the German Automobile Industry Association, the dynamic friction factor between the internal and external threads of the internal and external threaded parts should not be greater than 0.15.

### SUMMARY

The technical problem to be solved by the present invention is: in order to overcome the shortcomings of the Spiralock cylindrical threaded parts, the present invention provides an anti-loosening threaded part, which, as long as the surface of the internal thread or the external thread and the wedge-shaped inclined surface are in a mutually close contact through pretightening force, can realize effective loosening prevention in cylindrical threaded part connecting pairs having threaded surfaces and made of various materials.

To solve the problem, the technical solution adopted by the present invention is: a cylindrical internal thread is arranged in an inner hole of the internal threaded part, a cylindrical external thread is arranged on a screw of the external threaded part, surfaces of the internal thread and the external thread are not covered with anti-loosening materials, the root of the external thread or the internal thread has a wedge-shaped inclined surface forming an included angle α or an included angle β with a longitudinal center axis of the external thread or the internal thread, tanα or tanβ is less than a dynamic friction factor between the wedge-shaped inclined surface and a contact surface of the internal thread or the external thread, after the internal thread part and the external thread part are mutually tightened, a surface of the internal thread or the external thread and the wedge-shaped inclined surface are mutually close contact structures, that is, a horizontal locking structure, so that the movement of rotating transversely without a fixed shaft between the internal and external threaded parts can be effectively prevented, that is, effective loosening prevention between the cylindrical internal threaded part and the cylindrical external threaded part can be realized.

According to the VDA235-101 standard made by the German Automobile Industry Association, the dynamic friction factor between the internal and external threads of the internal and external threaded parts should not be greater than 0.15, and it is impossible that tanα or tanβ becomes 0 (because it is impossible that the longitudinal center axis of the internal thread or the external thread is on the wedge-shaped inclined surface), and thus, preferably, tanα or tanβ is greater than 0 and less than 0.15.

The present invention has the following beneficial effects: the anti-loosening threaded part can realize effective loosening prevention in cylindrical threaded part connecting pairs having threaded surfaces and made of various materials as long as the surface of the internal thread or the external thread and the wedge-shaped inclined surface are in a mutually close contact through pretightening force. The anti-loosening threaded part has a simple structure, is convenient to use, and can realize mass production by use of the existing process and devices.

### BRIEF DESCRIPTION OF THE DRAWINGS

FIG. 1 is a schematic sectional side view of the center of a threaded part connecting pair after mutual tightening between an internal thread and an external thread according to a first embodiment of the present invention;
FIG. 2 is a partially enlarged schematic view of FIG. 1;
FIG. 3 is a schematic sectional side view of the center of a threaded part connecting pair after mutual tightening between an internal thread and an external thread according to a second embodiment of the present invention; and
FIG. 4 is a partially enlarged schematic view of FIG. 3.

In the figures, 1. internal thread part, 2. external threaded part, 3. internal thread, 4. external thread, 5. longitudinal center axis, 6. cylindrical surface.

### DETAILED DESCRIPTION

Further detailed description is given to the anti-loosening threaded part of the present invention through specific embodiment below.

### Embodiment 1

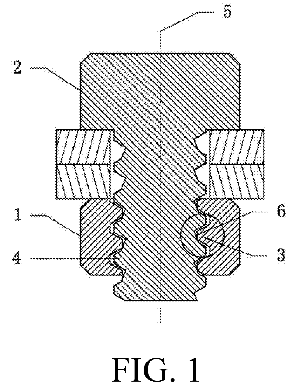

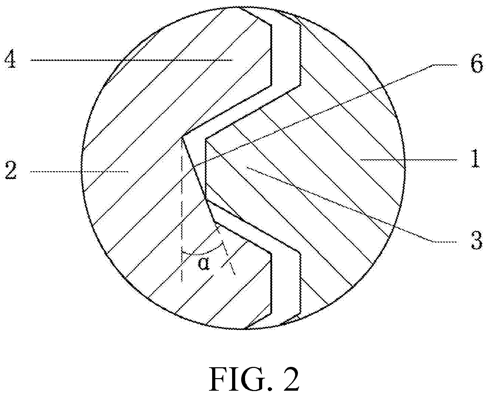

As shown in FIG. 1 and FIG. 2, an anti-loosening threaded part comprises an internal threaded part 1 and an external threaded part 2, wherein, as shown in FIG. 1, a cylindrical internal thread 3 is arranged in an inner hole of the internal threaded part 1, a cylindrical external thread 4 is arranged on a screw of the external threaded part 2; surfaces of the internal thread 3 and the external thread 4 are not covered with anti-loosening materials; as shown in FIG. 2, the root of the external thread 4 has a wedge-shaped inclined surface 6 forming an included angle α with a longitudinal center axis 5 of the external thread 4; tanα is less than a dynamic friction factor between the wedge-shaped inclined surface 6 and a contact surface of the internal thread 3; as shown in FIG. 1 and FIG. 2, after the internal thread part 1 and the external thread part 2 are mutually tightened, a surface of the internal thread 3 and the wedge-shaped inclined surface 6 are mutually close contact structures. The tanα is greater than 0 and less than 0.15.

### Embodiment 2

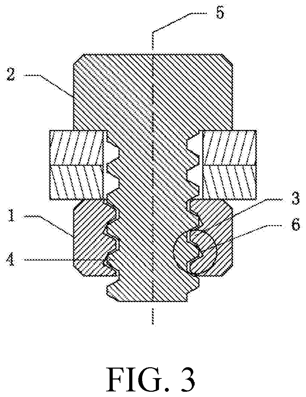

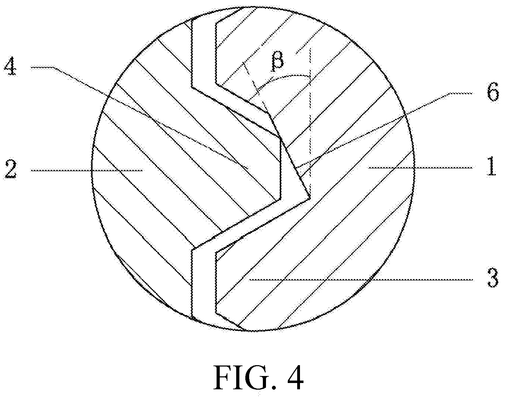

As shown in FIG. 3 and FIG. 4, an anti-loosening threaded part comprises an internal threaded part 1 and an external threaded part 2, wherein, as shown in FIG. 3, a cylindrical internal thread 3 is arranged in an inner hole of the internal threaded part 1, a cylindrical external thread 4 is arranged on a screw of the external threaded part 2; surfaces of the internal thread 3 and the external thread 4 are not covered with anti-loosening materials; as shown in FIG. 4, the root of the internal thread 3 has a wedge-shaped inclined surface 6 forming an included angle β with a longitudinal center axis 5 of the internal thread 3; tanβ is less than a dynamic friction factor between the wedge-shaped inclined surface 6 and a contact surface of the external thread 4; as shown in FIG. 3 and FIG. 4, after the internal thread part 1 and the external thread part 2 are mutually tightened, a surface of the external thread 4 and the wedge-shaped inclined surface 6 are mutually close contact structures. The tanβ is greater than 0 and less than 0.15.

The above embodiments merely exemplarily describe the principle and effects of the present invention-creation and some embodiments used, but are not used to limit the present invention; it should be noted that, those of ordinary skill in the art can make several transformations and improvements without departing from the concept of the present invention-creation, all of which fall within the protection scope of the present invention.

## Claims

1. An anti-loosening threaded part, comprising an internal threaded part and an external threaded part, wherein a cylindrical internal thread is arranged in an inner hole of the internal threaded part, a cylindrical external thread is arranged on a screw of the external threaded part, surfaces of the internal thread and the external thread are not covered with anti-loosening materials, the root of the external thread or the internal thread has a wedge-shaped inclined surface forming an included angle α or an included angle β with a longitudinal center axis of the external thread or the internal thread, after the internal thread part and the external thread part are mutually tightened, a surface of the internal thread or the external thread and the wedge-shaped inclined surface are mutually close contact structures, **characterized in that**: tanα or tanβ is less than a dynamic friction factor between the wedge-shaped inclined surface and a contact surface of the internal thread or the external thread.

2. The anti-loosening threaded part according to claim 1, **characterized in that**: the tanα or tanβ is greater than 0 and less than 0.15.
